# EUROPEAN PATENT APPLICATION

(11) **EP 4 556 312 A1**
(43) Date of publication of application: **21.05.2025**
(21) Application number: 23211014.8
(22) Date of filing: 20.11.2023
(51) Int. Cl.: B60Q 1/24, B60Q 1/48

(54) **A METHOD FOR CREATING A LIGHTING AMBIANCE IN AN EXTERNAL ENVIRONMENT AROUND A VEHICLE, WHEN THE VEHICLE IS PARKED**

(71) Applicant: VOLVO TRUCK CORPORATION, 405 08 Göteborg (SE)
(72) Inventor: NALLET, Sébastien, 38460 Vénérieu (FR); RIBERO, Raphaël, 69390 Millery (FR)
(74) Representative: Lavoix

(57) **Abstract**

A method for creating a lighting ambiance in an external environment around a vehicle (1), when the vehicle (1) is parked, the vehicle (1) comprising a plurality of exterior lights (2) for regulatory use, each having at least one light source (20), the method comprising:
- checking if the vehicle (1) is parked,
- if the vehicle (1) is parked, allowing to modify at least one parameter subject to regulation of at least one light source (20) of at least one of the plurality of exterior lights (2),
- if the vehicle (1) is not parked, preventing from modifying any parameter subject to regulation of all light sources (20) of the plurality of exterior lights (2),
- realizing said lighting ambiance when the vehicle (1) is parked by modifying said at least one parameter of at least one of the light sources (20) so that the at least one parameter is not compliant with regulation and by lighting said at least one of the light sources (20).

## Description

### Technical Field

The disclosure relates generally to activities around a vehicle when the vehicle is parked. In particular aspects, the disclosure relates to a method for creating a lighting ambiance in an external environment around a vehicle, when the vehicle is parked. The disclosure also relates to a computer system comprising processing circuitry configured to implement such a method and to a vehicle comprising such a computer system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### Background Art

In the context of vehicles, especially trucks, the drivers are not only driving the vehicle but also live inside and outside the vehicle. Truck drivers are spending time around the truck in dedicated truck parking areas for stops, for example for eating, resting, socializing. There is a need to make these stops more comfortable for them.

### Summary

This disclosure improves the situation.

According to a first aspect of the disclosure, it is proposed a method for creating a lighting ambiance in an external environment around a vehicle, when the vehicle is parked, the vehicle comprising a plurality of exterior lights for regulatory use, each having at least one light source, the method comprising:
- checking if the vehicle is parked,
- if the vehicle is parked, allowing to modify at least one parameter subject to regulation of at least one light source of at least one of the plurality of exterior lights,
- if the vehicle is not parked, preventing from modifying any parameter subject to regulation of all light sources of the plurality of exterior lights,
- realizing said lighting ambiance when the vehicle is parked by modifying said at least one parameter of at least one of the light sources so that the at least one parameter is not compliant with regulation and by lighting said at least one of the light sources.

The first aspect of the disclosure may seek to make the stops more comfortable for the drivers.

A technical benefit may include allowing a specific management of an ambient or comfort light to ease the exterior activities around the vehicle, especially the trucks, when the vehicle is parked.

A technical benefit may include using the existing exterior lights of the vehicle, modify their function and characteristics to meet an exterior life usage. In that usage, the vehicle is parked, so that exterior lights usage is not submitted to any regulation. This is offering an opportunity to use these exterior lights in another way than their original purpose.

There is no need to add a new light, as the existing exterior lights of the vehicle are used. The exterior lights may be turned into exterior ambient and comfort lights.

The following features, can be optionally implemented, separately or in combination one with the others:

Said at least one parameter is preferably chosen in the group consisting of:
- an intensity of the light source,
- a color of the light source,
- a flashing frequency of the light source, and
- an angular orientation of a light beam emitted by the light source.

A technical benefit is to modify at least one of such parameters for at least one light source in order to create a desired lighting ambiance. For example, the intensity of the light source may be reduced. The color may be changed for example to be warmer or to bring some color. The frequency may be changed for example from discontinuous to continuous, for existing exterior lights that flash such as direction indicators. The angular orientation of the light beam may be changed to light at a shorter distance for example.

Left and right exterior lights may be controlled and for example dimmed independently.

The method may comprise, if the vehicle is parked, allowing to modify at least one parameter subject to regulation of at least one light source of at least two of the plurality of exterior lights, wherein realizing said lighting ambiance comprises modifying at least one parameter of said at least one light source of said at least two of the plurality of exterior lights.

A technical benefit is to create around the vehicle a lighting ambiance with at least two exterior lights having at least one parameter of the light source being changed.

The method may use a controller of the vehicle, the controller comprising a processor and a memory storing data and instructions configured for execution by the processor. The controller may be configured to control checking if the vehicle is parked, allowing to modify at least one parameter if the vehicle is parked and preventing from modifying any parameter is the vehicle is not parked.

Modifying at least one parameter of at least one of the light sources of at least one of the plurality of exterior lights may be implemented by the controller, preferably by an ECU (Engine Control Unit) of the vehicle.

Checking if the vehicle is parked may comprise receiving an information from at least one sensor or connected device about a state of the vehicle, i.e. if it is parked or not.

The at least one sensor or connected device may be chosen in the group consisting of a key fob, a dashboard dedicated switch, a front camera, a side camera, a front radar, a side radar, a smart phone app, a voice recognition, an exterior control panel.

Said information may be received by the controller, notably by the ECU.

Said information may be a trigger for the controller, preferably the ECU, for allowing to modify at least one parameter subject to regulation of at least one light source of at least one of the plurality of exterior lights or preventing from modifying any parameter subject to regulation of all light sources of the plurality of exterior lights, depending on the state of the vehicle, i.e. if it is parked or not.

The plurality of exterior lights may comprise a front exterior light comprising head lamps with low and high beams, fog lamps, additional high beam, direction indicators, position lamps, rear lamps and possible working lamps.

The controller may comprise a user interface to exchanging data with a user, for example the driver. Realizing said lighting ambiance may be initiated by the user through the user interface, the user interface being for example an HMI interface, a smartphone app, a gesture control, a voice control, a cursor.

The memory of the controller may comprise a plurality of lighting ambiances. The method may comprise choosing a lighting ambiance among said plurality of lighting ambiances, each lighting ambiance comprising a predetermined modification of at least one parameter of a plurality of light sources.

Choosing said lighting ambiance may be implemented by a user, by adjusting a cursor configured to be adjusted so as to choose among said plurality of lighting ambiances, said cursor being for example for example on a dashboard of the vehicle, on a smartphone, on a key fob, on an exterior part of the vehicle.

The driver may for example dim or mix the light sources of the exterior lights in order to create for example a fancy exterior living environment. The exterior lights may be turned into exterior ambient and comfort lights.

Alternatively, choosing a lighting ambiance may be made automatically as a function of a moment of the day or a brightness of external environment around the vehicle, such as dusk, night, morning.

According to a second aspect of the disclosure, it is proposed a computer system comprising processing circuitry configured to implement the method as recited above.

According to a third aspect of the disclosure, it is proposed a vehicle comprising said computer system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

In another aspect, it is proposed a computer software comprising instructions to implement at least a part of a method as defined here when the software is executed by a processor. In another aspect, it is proposed a computer-readable non-transient recording medium on which a software is registered to implement the method as defined here when the software is executed by a processor.

### Brief Description of Drawings

Other features, details and advantages will be shown in the following detailed description and on the figures, on which:
Fig. 1

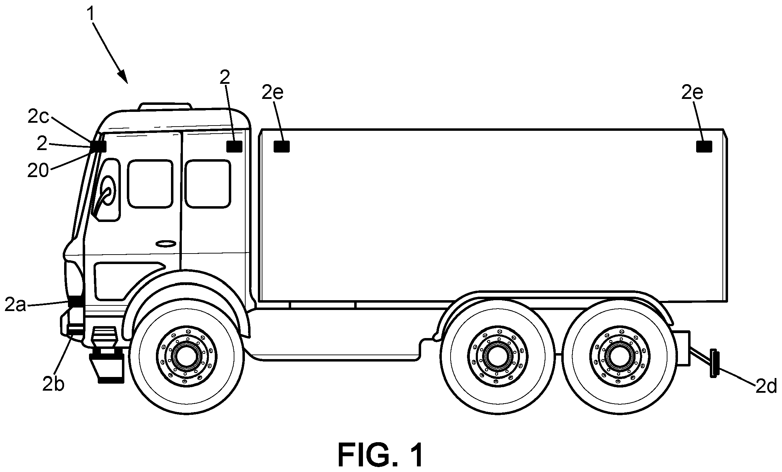

   [Fig. 1] is an exemplary vehicle according to an example.
Fig. 2

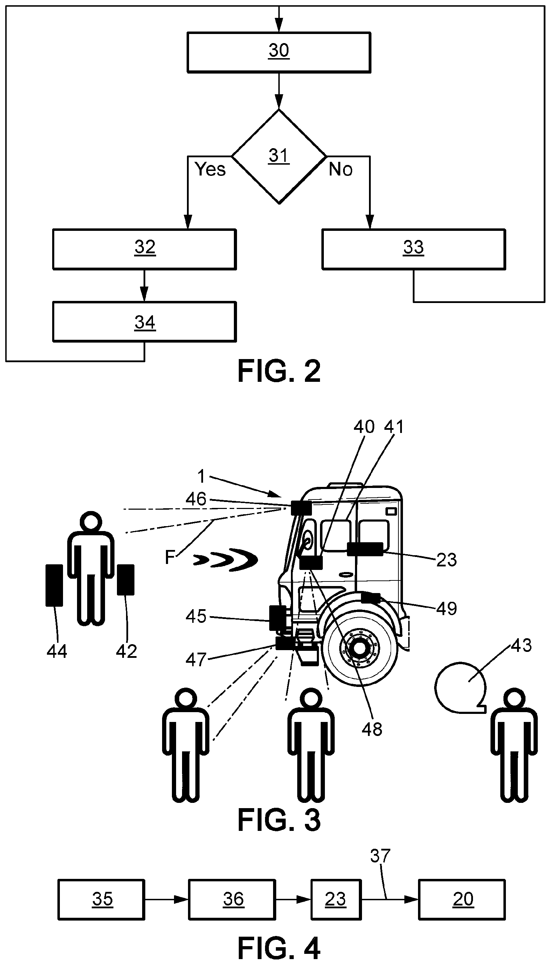

   [Fig. 2] is a block diagram of a method for creating a lighting ambiance in an external environment around a vehicle, when the vehicle is parked according to an example.
Fig. 3
   [Fig. 3] is schematic view of a vehicle during implementation of the method for creating a lighting ambiance in an external environment around a vehicle, when the vehicle is parked, according to an example.
Fig. 4
   [Fig. 4] is a block diagram of a computer system of a vehicle according to an example.

### Detailed description

The detailed description set forth below provides information and examples of the disclosed technology with sufficient detail to enable those skilled in the art to practice the disclosure.

It is now referred to figure 1. In the context of vehicles, especially trucks, the drivers are not only driving the vehicle but also live inside and outside the vehicle. Truck drivers are spending time around the truck in dedicated truck parking areas for stops, for example for eating, resting, socializing. There is a need to make these stops more comfortable for them.

Figure 1 shows a vehicle 1 which is a truck in this example. This vehicle 1 comprises a plurality of existing exterior lights 2, also called exterior lights 2, in a manner known per se, a part of which is shown in Figure 1. The exterior lights 2 comprise driving lamps, position lamps, direction indicator lamps. All these exterior lights 2 are submitted to regulation that is mandatory while driving. Other possible exterior lights 2 may comprise working lamps being focused and installed to target a dedicated vehicle equipment usage, such as crane controls, fifth wheel, trailer connection. Such working lamps may not be submitted to regulation and are dedicated to working tasks. In Figure 1, the exterior lights 2 that are shown are a front headlamp 2a comprising a position light, a low beam and a high beam, a front fog lamp 2b, an extra high beam 2c, a rear light 2d comprising a brake light, trailer lights 2e. Each exterior light 2 has at least one light source 20.

The disclosure uses at least part of these exterior lights 2 to improve the comfort of the stops for the drivers and possibly other persons. According to the disclosure, as shown in Figure 2, it is proposed a method for creating a lighting ambiance in an external environment around the vehicle 1, when the vehicle is parked.

Starting from an initial state 30 of the vehicle 1, the method comprises checking 31 if the vehicle is parked.

If the response is "yes", i.e. if the vehicle 1 is parked, the method comprises allowing 32 to modify one or several parameters subject to regulation of one or several light sources 20 of one or several exterior lights 2.

If the response is "no", i.e. if the vehicle 1 is not parked, the method comprises preventing 33 from modifying any parameter subject to regulation of all light sources 20 of the plurality of exterior lights 2. The light sources 20 of the plurality of exterior lights are compliant with regulations.

If the response is "yes", then the method comprises realizing 34 the lighting ambiance when the vehicle 1 is parked by modifying one or several parameters of one or several light sources 20 so that the parameter(s) is(are) not compliant with regulation anymore and lighting the light source(s) 20. This allows to create a fancy lighting ambiance around the truck.

The parameter may be chosen among an intensity of the light source, a color of the light source, a flashing frequency of the light source and an angular orientation of a light beam F emitted by the light source 20.

For example, the intensity and/or the color and/or the frequency of the light source and/or the angular orientation of a light beam of the light source(s) of one or several existing exterior lights may be changed during realizing 34.

The exterior lights 2 of the vehicle, especially of a truck, have a certain level of Kelvin degrees values which correspond to the color of the light source. They have also a certain intensity. These color and intensity, and also the frequency and the angular orientation are provided by the regulation for each exterior light of the vehicle during driving.

For example, the direction indicators are orange, with a low Kelvin degrees value.

The front high beams are white, with high Kelvin degrees value. They are used to illuminate at a distance over several dozens of meters, i.e. they have a high intensity. These high beams come from light sources that are located inside the front head lamp.

The front low beams are also white, with high Kelvin degrees value, but they have a midintensity, being made to be visible rather than illuminate.

The day running lights may be LED lights, with low Kelvin degrees value. Fog lights may be bulb lamps with a bit higher Kelvin value.

Several light sources 20 of one or several exterior lights may have at least one parameter modified during realizing 34 so as to realize a desired lighting ambiance.

For example, the intensity of the light source 20 may be reduced. The color may be changed for example to be warmer or to bring some color. The frequency may be changed for example from discontinuous to continuous, for existing exterior lights 2 that flash such as direction indicators. The angular orientation of the light beam may be changed to light at a shorter distance for example.

Such realizing 34 may be implemented by a controller 23, preferably by an ECU (Engine Control Unit), of the vehicle. The controller 23 comprises a processor and a memory storing data and instructions configured for execution by the processor.

Checking 31 if the vehicle 1 is parked may comprise receiving an information 36 from at least one sensor or connected device 35, which is a transmitter, about a state of the vehicle, i.e. if it is parked or not. At least one of these sensors or connected devices 35 may send an information that may be received by the controller 23, notably by the ECU, as shown in Figure 4. The at least one sensor or connected device 35 may for example be chosen among a switch in cab, a key fob, a smartphone, a driver's voice, an exterior control panel, a front camera, a left side camera, a right side camera, a front radar, a left side radar, a right side radar. This step is also shown in Figure 3.

As shown in Figure 3, several examples of sensors or connected devices 35 are shown: a HMI control such as a switch 40 inside a cab 41 of the vehicle 1, a key fob 42, a micro 49 for recognizing a voice 43, for example the driver's voice, a smartphone 44, an exterior control panel 45, a front camera 46 used for ADAS (Advanced Driver Assistance Systems), but also a left side camera, and/or a right side camera 48, used for visibility such as CMS (Camera Managing System) or ADAS or comfort Cams (Blind spot cam), a front radar 47, a left side radar, a right side radar. Such cameras or radars may detect a driver presence around the vehicle.

Said information 36 may be transmitted to the controller 23 via adapted and conventional channels depending on the transmitter. For example, if the transmitter is a switch 40 in the cab 41, the information may be transmitted via cab controls. If the transmitter is the key fob 42, the information may be transmitted via radio frequency. If the transmitter is a smartphone 44, the information may be transmitted with an app via specific connectivity. If the transmitter is a micro 49 intercepting a voice 43, the information may be transmitted via voice recognition. If the transmitter is an exterior control panel 45, the information may be transmitted via a key switch. It the transmitter is a camera, the information may be transmitted via camera communication bus network to a camera monitoring controlled by the controller. If the transmitter is a radar, the information may be transmitted via in vehicle communication network to a radar monitoring controlled by the controller.

Said information 36 may be a trigger for the controller 23, preferably the ECU, for allowing to modify one or several parameters subject to regulation of one or several light sources 20 of one or several exterior lights 2 or, on the contrary, preventing from modifying any parameter subject to regulation of all light sources 20 of the plurality of exterior lights 2, depending on the state of the vehicle, i.e. if it is parked or not.

The controller 23 may comprise a user interface to exchanging data with a user, for example the driver. Realizing said lighting ambiance may be initiated by a user, for example a driver, using one of an HMI interface, a smartphone app, a gesture control, a voice control, a cursor. In such case, the user may, for example through such HMI interface, smartphone app, gesture control or voice control or cursor, send at least one order to the controller 23 so that the controller 23 controls the modification 37 of the parameter(s) of the light source(s) 20, as shown in Figure 4 so as to create a particular lighting ambiance. A specific HMI interface could be created to ease the user experience in using that feature.

The memory of the controller 23 may comprise a plurality of lighting ambiances. The method may then comprise choosing a lighting ambiance among said plurality of lighting ambiances, each lighting ambiance comprising a predetermined modification of at least one parameter of a plurality of light sources.

Choosing said lighting ambiance may be implemented by the user, by adjusting a cursor configured to be adjusted so as to choose among said plurality of lighting ambiances, said cursor being for example for example on a dashboard of the vehicle, on a smartphone, on a key fob, on an exterior part of the vehicle.

The cursor may comprise a regular touch screen capability embedded in a smartphone. The user, for example the driver, may slide the cursor to adjust the exterior lights dimming, i.e. the lighting ambiance. He may choose one of the stored lighting ambiances. He may alternatively directly control the parameter(s) of one or several exterior lights so as to create, exterior light by exterior light, the lighting ambiance.

The HMI interface may be a touch screen volume like rotary wheel on the smartphone to adjust the dimming.

The choice of the exterior light to control from the smartphone could be selected by showing the driver a picture of the vehicle 1, especially the truck, with the exterior lights possible to dim and control.

Gesture control may be used to dim the exterior lights using the vehicle, especially truck, cameras. Gestures may be up and down with the arms or rotating the hand, like grasping a volume knob button, or rotating the fingers.

The exterior lights to be selected for a dimming may be pointed by the driver's finger in front of the vehicle 1, in particular truck, and monitored by the vehicle, in particular truck, camera.

Voice Control may offer a good potential for such feature of selecting the lights to dim and dim these ones.

The driver may for example dim and/or mix the light sources of the exterior lights in order to create for example a fancy exterior living environment. The exterior lights may be turned into exterior ambient and comfort lights.

A combination of dimming and mixing different light sources of the exterior lights may create a light emission totally different from the original light sources purposes.

Alternatively, choosing a lighting ambiance may be made automatically, for example being controlled by the controller 23, as a function of a moment of the day or a brightness of external environment around the vehicle, such as dusk, night, morning. This means that when the vehicle is parked and the controller 23 has received this information, it may automatically choose and create a lighting ambiance depending on a moment of the day or a brightness of external environment.

A computer system comprising processing circuitry may be configured to implement this method. The vehicle 1 may comprise said computer system which comprises the controller 23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method for creating a lighting ambiance in an external environment around a vehicle (1), when the vehicle (1) is parked, the vehicle (1) comprising a plurality of exterior lights (2) for regulatory use, each having at least one light source (20), the method comprising:
- checking if the vehicle (1) is parked,
- if the vehicle (1) is parked, allowing to modify at least one parameter subject to regulation of at least one light source (20) of at least one of the plurality of exterior lights (2),
- if the vehicle (1) is not parked, preventing from modifying any parameter subject to regulation of all light sources (20) of the plurality of exterior lights (2),
- realizing said lighting ambiance when the vehicle (1) is parked by modifying said at least one parameter of at least one of the light sources (20) so that the at least one parameter is not compliant with regulation and by lighting said at least one of the light sources (20).

2. The method according to the preceding claim, wherein said at least one parameter is chosen in the group consisting of:
- an intensity of the light source (20),
- a color of the light source (20),
- a flashing frequency of the light source (20), and
- an angular orientation of a light beam emitted by the light source (20).

3. The method according to claim 1 or 2, comprising, if the vehicle is parked, allowing to modify at least one parameter subject to regulation of at least one light source (20) of at least two of the plurality of exterior lights (2), wherein realizing said lighting ambiance comprises modifying at least one parameter of said at least one light source (20) of said at least two of the plurality of exterior lights (2).

4. The method according to any preceding claim, the method using a controller (23) of the vehicle (1) comprising a processor and a memory storing data and instructions configured for execution by the processor, the controller (23) being configured to control checking if the vehicle (1) is parked, allowing to modify at least one parameter if the vehicle (1) is parked and preventing from modifying any parameter is the vehicle (1) is not parked, wherein modifying at least one parameter of at least one of the light sources (20) of at least one of the plurality of exterior lights (2) is implemented by a controller (23), preferably by an ECU (Engine Control Unit) of the vehicle (1).

5. The method according to any preceding claim, wherein checking if the vehicle (1) is parked comprises receiving an information from at least one sensor or connected device (35) about a state of the vehicle, i.e. if it is parked or not.

6. The method according to claim 5, wherein the at least one sensor or connected device (35) is chosen in the group consisting of a key fob, a dashboard dedicated switch, a front camera, a side camera, a front radar, a side radar, a smart phone app, a voice recognition, an exterior control panel.

7. The method according to claims 4 and 5, wherein said information is received by the controller (23), notably by the ECU.

8. The method according to claims 4 and 5, wherein said information is a trigger for the controller (23), preferably the ECU, for allowing to modify at least one parameter subject to regulation of at least one light source of at least one of the plurality of exterior lights or preventing from modifying any parameter subject to regulation of all light sources of the plurality of exterior lights, depending on the state of the vehicle, i.e. if it is parked or not.

9. The method according to any preceding claim, wherein the plurality of exterior lights comprises a front exterior light comprising head lamps with low and high beams, fog lamps, additional high beam, direction indicators, position lamps, rear lamps and possible working lamps.

10. The method according to claim 4 and any preceding claim, wherein the controller (23) comprises a user interface to exchanging data with a user, for example the driver, and wherein realizing said lighting ambiance is initiated by the user through the user interface, the user interface being for example an HMI interface, a smartphone app, a gesture control, a voice control, a cursor.

11. The method according to claim 4 and any preceding claim, wherein the memory of the controller comprises a plurality of lighting ambiances, wherein the method comprises choosing a lighting ambiance among said plurality of lighting ambiances, each lighting ambiance comprising a predetermined modification of at least one parameter of a plurality of light sources.

12. The method according to the preceding claim, wherein choosing said lighting ambiance is implemented by a user, by adjusting a cursor configured to be adjusted so as to choose among said plurality of lighting ambiances, said cursor being for example on a dashboard of the vehicle, on a smartphone, on a key fob, on an exterior part of the vehicle.

13. The method according to claim 11, wherein choosing a lighting ambiance is made automatically as a function of a moment of the day or a brightness of external environment around the vehicle.

14. A computer system comprising processing circuitry configured to implement the method according to any of claims 1 to 13.

15. A vehicle comprising the computer system of claim 14.
